# EUROPEAN PATENT APPLICATION

(11) **EP 1 826 223 A1**
(43) Date of publication of application: **29.08.2007**
(21) Application number: 05795878.7
(22) Date of filing: 20.10.2005
(51) Int. Cl.: C08F 283/06, C08G 18/63, C09J 151/06

(54) **POLYETHER POLYOL, METHOD FOR PRODUCING SAME AND USE THEREOF**

(30) Priority: 18.11.2004 JP 2004335045
(71) Applicant: Mitsui Chemicals Polyurethanes, Inc., Tokyo 105-7117 (JP)
(72) Inventor: KUNIHIRO, Tamotsu, Sodegaura-shi, Chiba 2990265 (JP); MATSUMOTO, Shinsuke, Sodegaura-shi, Chiba 2990265 (JP); IWA, Tsuyoshi, Sodegaura-shi, Chiba 2990265 (JP)
(74) Representative: Wytenburg, Wilhelmus Johannes
(86) International application number: PCT/JP2005/019338
(87) International publication number: WO 2006/054422

(57) **Abstract**

A polyether polyol grafted with hydroxyl group-containing (meth)acrylate related to the present invention has an ester group represented by formula (1) below in the molecule. 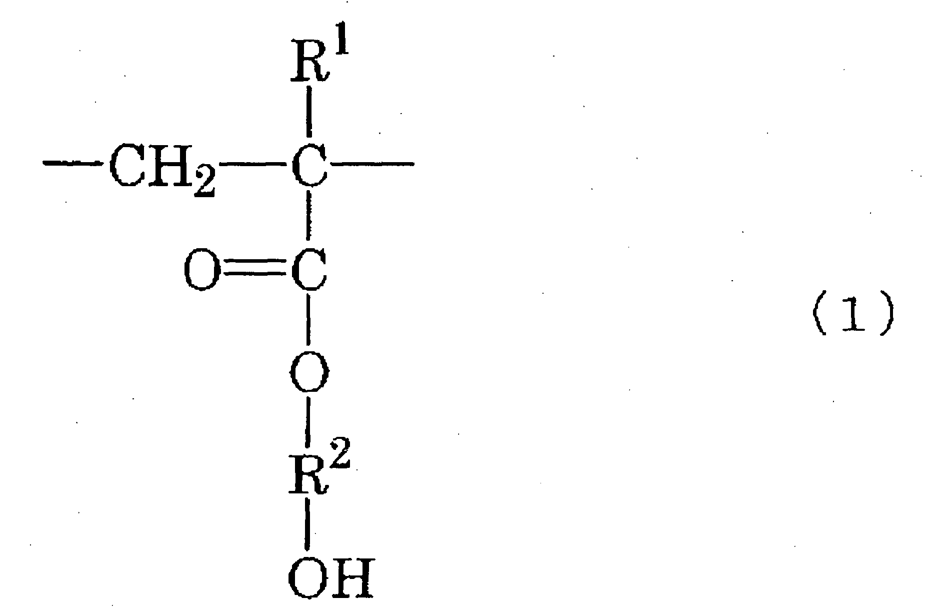 (In the formula, R¹ represents a hydrogen atom or a methyl group, and R² is an alkylene group having 1 to 18 carbon atoms.) This polyether polyol is suitably used as a raw material for polyurethane resin cured products excellent in mechanical strength and weather resistance.

## Description

### Technical Field

The present invention relates to a new polyether polyol, a method for producing said polyether polyol, and use of said polyether polyol, more specifically, to a polyether polyol grafted with a hydroxyl group-containing (meth)acrylate, and a method for producing the same.

### Background Art

Polyether polyols are widely used as raw materials for polyurethane resins. Such polyether polyols have problems such as insufficient mechanical strength of cured polyurethane resins and liability to degradation on prolonged exposure to ultraviolet light when used without any countermeasures. Therefore, for example when high hardness is required, a vinyl polymer is often dispersed in the polyether polyol to produce a polymer polyol. Such polymer polyol is produced, for example, by polymerization of a vinyl monomer such as acrylate in the polyol in the presence of azobisisobutyronitrile or benzoyl peroxide as a polymerization catalyst, as described in Patent Document 1 (Japanese Patent Application Publication S41-3473). However, the polymer polyol produced using azobisisobutyronitrile or benzoyl peroxide as a catalyst is generally white cloudy and therefore has a problem of limited use.

On the other hand, a graft copolymer of an olefin with a polyoxyalkylene compound is disclosed in Patent Document 2 (Japanese Patent Application Publication S47-47999). The catalyst used therein is a peroxide having a peroxide group bonded to a tertiary carbon atom, and it is also disclosed that the graft copolymer synthesized by using this catalyst is transparent. The document also illustrates examples of the olefin, which include hydrocarbon olefins, olefinic nitriles, alkenyl esters of saturated aliphatic carboxylic acids, alkyl acrylates, alkyl methacrylates, and unsaturated fatty acids. However, cured polyurethane resins including the graft copolymer still have room for improvements in mechanical strength and long-term weather resistance. Therefore, further improvements are required in these characteristics.
Patent Document 1: JP-B-S41- 3473
Patent Document 2: JP-B-S47-47999

### Disclosure of the Invention

### Problems to be Solved by the Invention

The present invention is directed to solving the problems associated with the related art described above, and has objects to provide a transparent polyether polyol useful as a raw material for cured polyurethane resins with excellent mechanical strength and weather resistance, to provide a method for producing said polyether polyol, and to provide a polyurethane resin composition using said polyether polyol.

### Means for Solving the Problems

As a result of intensive research to solve the above problems, the present inventors have found that a polyether polyol grafted with a hydroxyl group-containing vinyl monomer in the presence of a specific radical initiator is transparent, and that cured polyurethane resins produced using this polyether polyol are excellent in mechanical strength and weather resistance. The present invention has been thus completed.
Namely, a polyether polyol grafted with hydroxyl group-containing (meth)acrylate related to the present invention comprises an ester group represented by formula (1) below in the molecule.

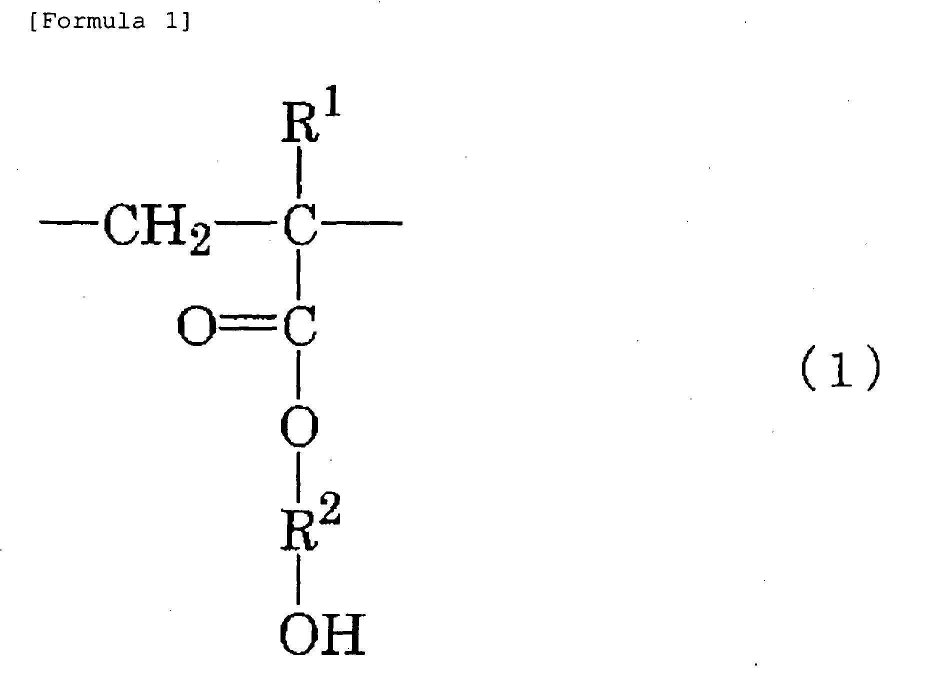

In the formula, R¹ represents a hydrogen atom or a methyl group, and R² represents an alkylene group having 1 to 18 carbon atoms.
The polyether polyol grafted with hydroxyl group-containing (meth)acrylate related to the present invention may be obtained by reacting a polyoxyalkylene polyol with a vinyl monomer including at least a hydroxyl group-containing (meth)acrylate represented by formula (2) below.

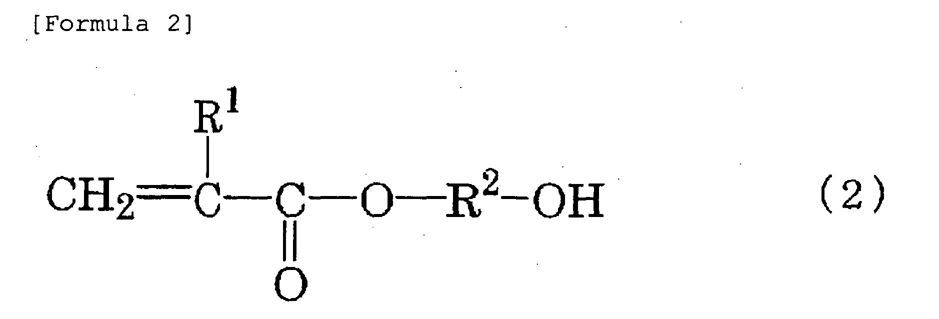

In the formula, R¹ represents a hydrogen atom or a methyl group, and R² represents an alkylene group having 1 to 18 carbon atoms.
Furthermore, the polyether polyol grafted with hydroxyl group-containing (meth)acrylate related to the present invention may be obtained by the reaction of 40 to 95 parts by weight of a polyoxyalkylene polyol with 5 to 60 parts by weight of a vinyl monomer including at least a hydroxyl group-containing (meth)acrylate represented by formula (2) below (with the proviso that the sum of the polyoxyalkylene polyol and the vinyl monomer is 100 parts by weight) in the presence of an alkyl peroxide as a radical initiator. In this reaction, 0.1 to 5 moles of the alkyl peroxide and 0.5 to 10 moles of the hydroxyl group-containing (meth)acrylate are used relative to 1 mole of hydroxyl group in the polyoxyalkylene polyol.

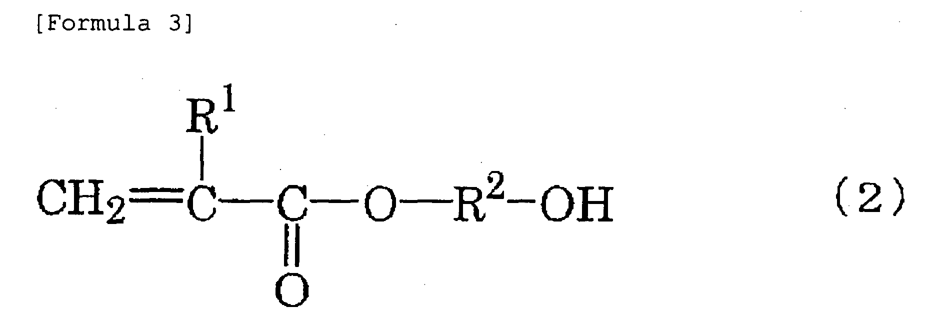

In the formula, R¹ represents a hydrogen atom or a methyl group, and R² represents an alkylene group having 1 to 18 carbon atoms.
In one preferred embodiment, the polyether polyol grafted with hydroxyl group-containing (meth)acrylate has a turbidity in light transmission of 50 degrees (kaolin) or less. In another preferred embodiment, the transmittance is 30% or less at wavelength of 300 nm and 90% or more at wavelength of 500 nm when measured on a spectrophotometer.

One-component and two-component curable polyurethane resin compositions related to the present invention comprise the above polyether polyol grafted with hydroxyl group-containing (meth)acrylate.
An adhesive related to the present invention comprises the above polyether polyol grafted with hydroxyl group-containing (meth)acrylate.
A method related to the present invention for producing a polyether polyol grafted with hydroxyl group-containing (meth)acrylate comprises reacting 40 to 95 parts by weight of a polyoxyalkylene polyol with 5 to 60 parts by weight of a vinyl monomer including at least a hydroxyl group-containing (meth)acrylate represented by formula (2) below (with the proviso that the sum of the polyoxyalkylene polyol and the vinyl monomer is 100 parts by weight) in the presence of an alkyl peroxide as a radical initiator.

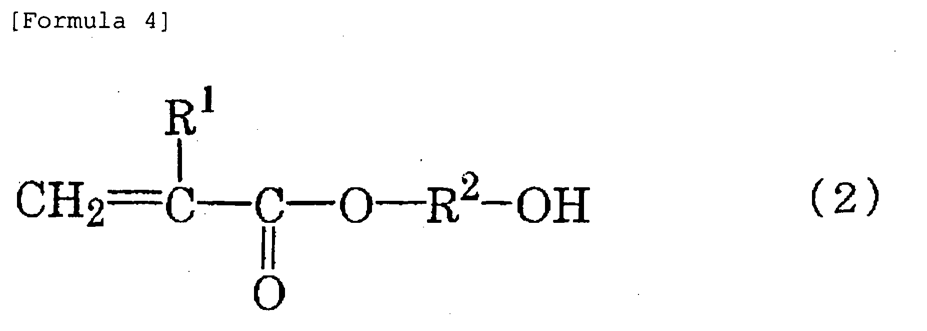

In the formula, R¹ represents a hydrogen atom or a methyl group, and R² represents an alkylene group having 1 to 18 carbon atoms.
In a preferred embodiment of the above production method, 0.1 to 5 moles of the alkyl peroxide and 0.5 to 10 moles of the hydroxyl group-containing (meth)acrylate are used relative to 1 mole of hydroxyl group in the polyoxyalkylene polyol.

The polyoxyalkylene polyol preferably has a number-average molecular weight of 500 to 10000 and contains 1 to 8 hydroxyl groups in the molecule.

### Effects of the Invention

The polyether polyol according to the present invention is transparent and suitably used as a raw material for cured polyurethane resins excellent in mechanical strength and weather resistance.

### Best Mode for Carrying out the Invention

### [Grafted polyether polyol]

The polyether polyol grafted with hydroxyl group-containing (meth)acrylate related to the present invention (hereinafter described as "grafted polyether polyol") has an ester group represented by formula (1) below.

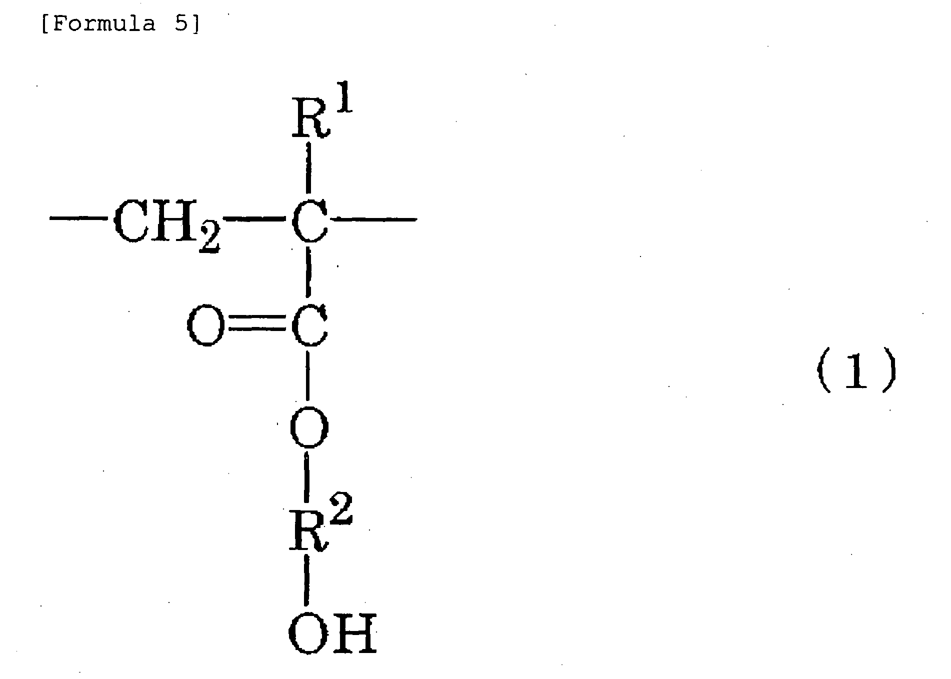

In the formula, R¹ represents a hydrogen atom or a methyl group, and R² represents an alkylene group having 1 to 18 carbon atoms.
Such grafted polyether polyol can be obtained, for example, by graft reaction of a polyoxyalkylene polyol with a vinyl monomer including at least a hydroxyl group-containing (meth)acrylate represented by formula (2) below. An alkyl peroxide is preferably used as a radical initiator for this graft reaction.

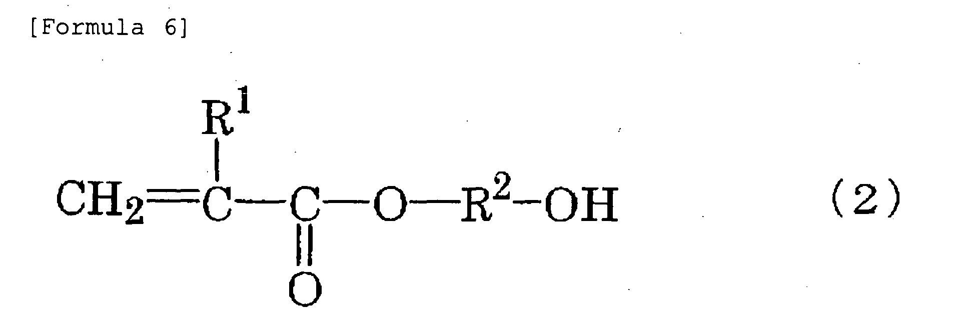

In the formula, R¹ represents a hydrogen atom or a methyl group, and R² represents an alkylene group having 1 to 18 carbon atoms.
The ester group represented by formula (1) is derived from the hydroxyl group-containing (meth)acrylate represented by formula (2). The grafted polyether polyol related to the present invention preferably has a structure where the ester group is grafted to an alkylene group in the polyoxyalkylene polyol.

### (Polyoxyalkylene polyol)

The polyoxyalkylene polyol used for the present invention can be produced by a conventional method, for example, ring-opening polymerization of an alkylene oxide with a hydroxyl group-containing compound in the presence of a known catalyst, for example, an alkali metal catalyst such as potassium hydroxide or cesium hydroxide, a complex metal catalyst such as cyano complex of zinc and cobalt, or a phosphazenium catalyst which has a nitrogen-phosphorous double bond, such as phosphazene or phosphazenium. In the present invention, it is preferred to remove the catalyst after completion of the ring-opening polymerization.

The hydroxyl group-containing compound may be any compound generally used for producing polyoxyalkylene polyols without particular limitation. Examples thereof include alkylene glycols such as ethylene glycol and propylene glycol; triols such as glycerol and trimethylolpropane; tetraols such as pentaerythritol and diglycerol; hexaols such as sorbitol; cane sugar; and others.

The alkylene oxides include ethylene oxide and propylene oxide, which may be used alone or in combination. It is preferable to use propylene oxide alone or ethylene oxide and propylene oxide in combination. Namely, the polyoxyalkylene polyol preferably contains at least an oxypropylene unit.

The number-average molecular weight of the polyoxyalkylene polyol is preferably 500 to 10000, more preferably 1000 to 8000, and most preferably 2000 to 5000. When the number-average molecular weight of the polyoxyalkylene polyol is in the above range, the resultant grafted polyether polyol is transparent and has suitable viscosity for easy handling. The number-average molecular weight of the polyoxyalkylene polyol can be adjusted by controlling the degree of ring-opening polymerization of the alkylene oxide.

The polyoxyalkylene polyol preferably has 1 to 8 hydroxyl groups, more preferably 2 to 5 hydroxyl groups in the molecule. When the number of hydroxyl groups in the polyoxyalkylene polyol is in the above range, temporal changes in properties, such as increase of viscosity, are suppressed even if the ployoxyalkylene polyol is mixed with a compound having a functional group reactive to the hydroxyl group.
In the present invention, it is desirable to use the polyoxyalkylene polyol in an amount of generally 40 to 95 parts by weight, preferably 50 to 90 parts by weight, more preferably 60 to 85 parts by weight, relative to 100 parts by weight of the sum of the polyoxyalkylene polyol and vinyl monomer. When the polyoxyalkylene polyol is used in the above amount, the resultant grafted polyether polyol is transparent and useful as a raw material for cured polyurethane resins more excellent in mechanical strength and long-term weather resistance.

### (Vinyl monomer)

The vinyl monomer used in the present invention includes at least a hydroxyl group-containing (meth)acrylate represented by formula (2). The polyether polyol that is grafted with the vinyl monomer including the hydroxyl group-containing (meth)acrylate shows transparency, and polyurethane resins including this grafted polyether polyol give cured products excellent in mechanical strength and long-term weather resistance. It is particularly desirable to use the hydroxyl group-containing (meth)acrylate in an amount of generally 0.5 to 10 moles, preferably 0.75 to 8 moles, more preferably 1 to 6 moles relative to 1 mole of hydroxyl group in the polyoxyalkylene polyol.

Other vinyl monomers may be used in combination with the hydroxyl group-containing (meth)acrylate, and examples thereof include acrylonitrile, styrene, acrylamide, acrylic acid esters, methacrylic acid esters, vinyl esters such as vinyl acetate, vinyl ethers such as ethyl vinyl ether, and others. These other vinyl monomers may be used alone or in combination of two or more.

In the present invention, it is desirable to use the vinyl monomer(s) including the hydroxyl group-containing (meth)acrylate in an amount of generally 5 to 60 parts by weight, preferably 10 to 50 parts by weight, more preferably 15 to 40 parts by weight relative to 100 parts by weight of the sum of the polyoxyalkylene polyol and vinyl monomer(s). When the vinyl monomer(s) is (are) used in the above amount, the resultant grafted polyether polyol is transparent and suitable for use as a raw material for cured polyurethane resins more excellent in mechanical strength and long-term weather resistance.

### (Radical initiator)

In the present invention, an alkyl peroxide is preferably used as a radical initiator in the graft reaction. Examples of the alkyl peroxide used in the present invention include dialkyl peroxides such as di-tert-butyl peroxide, di-tert-hexyl peroxide, α,α'-bis(tert-butylperoxy)diisopropylbenzene, dicumyl peroxide, 2,5-dimethyl-2,5-bis(tert-butylperoxy)hexane, and tert-butyl cumyl peroxide; peroxy esters such as tert-butylperoxy neodecanoate, tert-butylperoxy pivalate, tert-butylperoxy 2-ethylhexanoate, tert-butylperoxy isobutyrate, tert-butylperoxy benzoate, and tert-butylperoxy acetate; peroxyketals such as 1,1-bis(t-butylperoxy)-2-methylcyclohexane, 1,1-bis(t-hexylperoxy)-3,3,5-trimethylcyclohexane, 1,1-bis(t-hexylperoxy)cyclohexane, 1,1-bis(t-butylperoxy)-3,3,5-trimethylcyclohexane, 1,1-bis(t-butylperoxy)cyclohexane, 2,2-bis(4,4-dibutylperoxycyclohexyl)propane, 2,2-bis(t-butylperoxy)butane, and n-butyl 4,4-bis(t-butylperoxy)valerate; and the like.

These alkyl peroxides may be used alone or in combination of two or more. In the present invention, generally, 0.1 to 5 moles of the alkyl peroxide is preferably used relative to 1 mole of hydroxyl group in the polyoxyalkylene polyol. When the alkyl peroxide is used in the above range, the graft reaction of the polyoxyalkylene polyol and the vinyl monomer(s) proceeds successfully.

### (Graft reaction)

In conducting the graft reaction, it is preferred to add the vinyl monomer(s) to the polyoxyalkylene polyol. The reaction temperature is preferably 100 to 200°C, more preferably 120 to 180°C, and most preferably 140 to 160°C.
The vinyl monomer(s) may be added in the whole amount at a time or may be gradually added over a certain period of time. However, when the vinyl monomer(s) is (are) added in the whole amount at a time, the temperature may rapidly rise due to the heat of reaction. Therefore, gradual addition is preferable. The time for gradual addition (dropping time) of the vinyl monomer(s) is preferably 5 to 600 minutes, more preferably 60 to 450 minutes, and most preferably 120 to 300 minutes. When the vinyl monomer(s) is (are) added dropwise over a period in the above range, the rapid temperature rise due to the heat of reaction is prevented and the graft reaction proceeds steadily. Preferably, the vinyl monomer(s) is (are) mixed in advance with part of the polyoxyalkylene polyol and this mixture is added to the remaining polyoxyalkylene polyol. When the vinyl monomer(s) is (are) added in such a manner, the graft reaction takes place steadily.

In the present invention, after the predetermined amount of the vinyl monomer(s) is added to the polyoxyalkylene polyol, the graft reaction system is kept at the above reaction temperature for aging. The reaction time for aging is preferably 5 to 600 minutes, more preferably 60 to 450 minutes, and most preferably 120 to 300 minutes. After aging, unreacted monomer is removed by vacuum treatment or the like, thereby the grafted polyether polyol related to the present invention is obtained.

The turbidity in light transmission of the grafted polyether polyol of the present invention is generally 50 degrees (kaolin) or less, preferably 40 degrees (kaolin) or less, more preferably 25 degrees (kaolin) or less, and the grafted polyether polyol has transparency. The light transmittance of the grafted polyether polyol is preferably 30% or less, more preferably 25% or less, and particularly preferably 20% or less at wavelength of 300 nm when measured with a spectrophotometer. The light transmittance of the grafted polyether polyol at wavelength of 500 nm is preferably 90% or more and more preferably 93% or more. The above light transmittance at wavelength of 300 nm means that the grafted polyether polyol has an enough amount of graft chains and has excellent compatibility with acrylic resins. The above light transmittance at wavelength of 500 nm means that the grafted polyether polyol has excellent transparency in visible light region.

### (Polyurethane resin composition and its cured product)

The grafted polyether polyol related to the present invention is suitably used as a raw material for one-component or two-component curable polyurethane resin compositions. Moreover, such polyurethane resin compositions are suitable for use as adhesives and waterproofing agents.
In the polyurethane resin composition, the grafted polyether polyol described above may be used alone or in combination with an active hydrogen compound in such an amount that the effects of the present invention are not impaired. Examples of the active hydrogen compound include polyols used for general one-component or two-component curable polyurethane resin compositions. Specific examples include glycerol, cane sugar, pentaerythritol, sorbitol, trimethylolpropane, diglycerol, glycols such as ethylene glycol, diethylene glycol, triethylene glycol, propylene glycol, dipropylene glycol, 1,3-propanediol, 1,4-butanediol, 1,3-butanediol, 1,2-butanediol, 1,6-hexanediol, trimethylpentanediol, 1,4-cyclohexanediol, 1,4-cyclohexanedimethanol, neopentyl glycol, and 8-octanediol, and the like. The above-described polyoxyalkylene polyol may also be used as the active hydrogen compound.

In the polyurethane resin composition, an organic isocyanate compound is used as a curing agent. The organic isocyanate compound used herein is not particularly limited as long as it is an isocyanate group-containing compound generally used for one-component or two-component curable polyurethane resin compositions. Examples thereof include aliphatic polyisocyanates, alicyclic polyisocyanates, aromatic-aliphatic polyisocyanates, aromatic polyisocyanates, derivatives and modified forms of these isocyanates, and the like.

The above polyurethane resin composition may contain conventional additives such as curing catalysts, antioxidants, ultraviolet absorbers, flame-retardants, stabilizers, and plasticizers.
Cured products obtained from the polyurethane resin composition are excellent in mechanical strength and weather resistance, and are particularly resistant to deterioration such as deformation even on prolonged exposure to ultraviolet light.

### [Examples]

The present invention will be illustrated with reference to Examples in the following. However, the present invention is not limited to these Examples. Here, "parts" and "%" represent "parts by weight" and "wt%", respectively, unless otherwise specified.

Methods of analysis and measurements in Examples and Comparative Examples are as follows.
(1) Properties of polyether polyol or polyether polyol composition
   (i) Hydroxyl value
      The hydroxyl value was measured according to section 6.4 "Hydroxyl value" in JIS K1557 "Test method of polyether for polyurethane".
   (ii) Viscosity
      The viscosity was measured according to section 6.3 "Viscosity" in JIS K1557.
   (iii) Turbidity
      The turbidity was measured according to section 9.2 "Turbidity in light transmission" in JIS K0101 "Test method for industrial water" using kaolin standard solution.
   (iv) Appearance
      The appearance was visually observed at ambient temperature (20 to 25°C).
   (v) Light Transmittance
      Light transmittance spectra were recorded on a UV-vis spectrophotometer (manufactured by Hitachi, Ltd. U-4100). Transmittance at wavelengths of 300 nm and 500 nm is given. The transmittance at 300 nm, which is in ultraviolet region, reflects the chemical structure of the grafted polyol. The transmittance at 500 nm, which is in visible region, is an index reflecting the transparency in visual observation.
      · Measurement method: transmission
      · Measurement mode: wavelength scan
      · Data mode: transmittance (0 to 100%)
      · Scan speed: 300 nm/min
      · Slit width: 6.00 nm (fixed)
      · Sampling interval: 1.00 nm
      · Detector: integrating sphere/photomultiplier
      · Cell: quartz cell with an optical path length of 10 mm
      · Reference: hexane
      · Scan range: 900 to 200 nm
      · Baseline correction: After baseline was acquired with the reference cell and sample cell both filled with hexane, the sample was put in the sample cell and transmittance thereof was measured.
   (vi) Polymer content in polyether polyol composition
      The polymer content in the polyether polyol composition was defined as the amount of polymer derived from vinyl monomer(s) in the reaction of the polyoxyalkylene polyol and the vinyl monomer(s). The amount of unreacted vinyl monomer(s) was estimated by gas chromatography under the following conditions, and this value was subtracted from the amount of vinyl monomer(s) fed to the reaction.
      - Gas chromatograph: GC-14A manufactured by Shimadzu Corporation
      - Carrier gas: helium, 30 ml/min
      - Column: G-300 made by Chemical Evaluation and Research Institute, with an inner diameter of 1.2 mm, length of 40 m, and film thickness of 1.0 µm.
      - Column temperature: The sample was heated at 90°C for 6 min, the temperature was raised at a rate of 20°C/min, and the sample was heated at 200°C for 8 min.

(2) Characteristics of cured polyurethane resin
   (i) Hardness
      The hardness was measured according to section 7 "Hardness test" in JIS K7312 "Physical test method for molded thermosetting polyurethane elastomer" and Test Type-A of section 5 "Durometer hardness" in JIS K6253 "Hardness test method for vulcanized rubber and thermoplastic rubber". The results are indicated as an average of five runs according to section 5.6 "Reporting method of test results" in JIS K6253. (ii) Modulus
      According to section 5 "Tensile test" in JIS K7312, tensile test was performed using a dumbbell No. 2 specimen described in section 5.3 "Specimen", and the modulus 100 (M₁₀₀), a tensile stress at 100% elongation, was calculated according to section 5.5.3 "Tensile stress".
   (iii) Tensile strength
      Measurement was performed according to section 5 "Tensile test" in JIS K7312 using a dumbbell No. 2 specimen described in section 5.3 "Specimen", and the tensile strength was calculated according to section 5.5.1 "Tensile strength".
   (iv) Elongation
      Measurement was performed according to section 5 "Tensile test" in JIS K7312 using a dumbbell No. 2 specimen described in section 5.3 "Specimen", and the elongation was calculated according to section 5.5.2 "Elongation at break".
   (v) Tear strength
      The tear strength was measured according to section 6 "Tear test" in JIS K7312 using an angle-type specimen without notch (B) described in section 6.3 "Specimen".
   (vi) Weather resistance
      Each polyurethane resin composition was formed into a sheet sized 40 mm x 40 mm x 2 mm, and the sheet was kept at ambient temperature for 7 days. Using a Fedo meter (manufactured by Suga Test Instruments Co., Ltd., Type: FAL-5H-B), the sheet was kept at 63°C with no rainfall for 18 hours, 100 hours, or 250 hours and deformation thereof was observed and evaluated according to the following criteria. For the purpose of shortening the test period, no anti-aging agent had been blended in preparing the polyurethane resin composition.
      A: No change in shape
      B: Partly melted
      C: Melted
   (vii) Adhesion
      To one side of an aluminum plate whose surface had been electro-oxidized in sulfuric acid to form an anodized aluminum film, a masking tape was attached to provide a peeling-off end.

Meanwhile, a prepolymer was added to the polyol mixture in such an amount that the NCO index (molar ratio of NCO/hydroxyl group) was 1.1, and these were homogeneously mixed with a spatula for 2 minutes to prepare a two-component curable polyurethane resin composition.
This two-component curable polyurethane resin composition was applied in a thickness of 0.1 g/cm² onto the above aluminum plate using a brush. A piece of non-woven fabric (made of polyester, produced by TOYOBO Co., Ltd., trade name: Sunciral cloth 30H, 1 cm x 10 cm) was laid on the coated plate and was allowed to be impregnated with the polyurethane resin composition. After that, the two-component curable polyurethane resin composition was further applied onto the non-woven fabric in a thickness of 0.1 g/cm², followed by curing in an oven at 40°C for 24 hours.

A grip end was provided by peeling off the masking tape at one end of the cured product. To this grip end, a push-pull tester (made by Iida Co., Ltd., maximum capacity: 5 kg) was fixed. After the zero point adjustment, the push-pull tester was slowly pulled up vertically to measure the adhesion strength. An average value of three measurements was obtained.

### [Preparation Example 1]

### (Preparation of polyoxyalkylene polyol (1))

Dipropylene glycol and potassium hydroxide in an amount of 6 mol% based on the amount of hydroxyl groups in dipropylene glycol were placed in an autoclave, and the autoclave was evacuated. Propylene oxide was gradually added into the autoclave while keeping the internal pressure not more than 0.4 MPaG, and the reaction system was heated to 110°C to conduct addition polymerization of dipropylene glycol and propylene oxide. The crude polyol obtained was neutralized with phosphoric acid and filtered to obtain a polyoxyalkylene polyol (1). The polyoxyalkylene polyol (1) was polyoxypropylene polyol having a hydroxyl value of 37.4 mg KOH/g, a viscosity of 600 mPa·s/25°C, and a number-average molecular weight of 3000 relative to polypropylene glycol standards measured with a gel permeation chromatograph (GPC, columns: TSKgel G1000H + G2000H + G3000H + Guard Column).

### [Preparation Example 2]

### (Preparation of polyoxyalkylene polyol (2))

Addition polymerization of dipropylene glycol and propylene oxide was conducted in the same manner as in Preparation Example 1 except that the amount of propylene oxide added was changed. The crude polyol obtained was neutralized with phosphoric acid and filtered to obtain a polyoxyalkylene polyol (2). The polyoxyalkylene polyol (2) was polyoxypropylene polyol having a hydroxyl value of 112.0 mg KOH/g, a viscosity of 150 mPa·s/25°C, and a number-average molecular weight of 1000 relative to polypropylene glycol standards measured with a gel permeation chromatograph (GPC, columns: TSKgel G1000H + G2000H + G3000H + Guard Column).

### [Preparation Example 3]

### (Preparation of polyoxyalkylene polyol (3))

Addition polymerization of glycerol and propylene oxide was conducted in the same manner as in Preparation Example 1 except that dipropylene glycol was replaced by glycerol. The crude polyol obtained was neutralized with phosphoric acid and filtered to obtain a polyoxyalkylene polyol (3). The polyoxyalkylene polyol (3) was polyoxypropylene polyol having a hydroxyl value of 161.0 mg KOH/g, a viscosity of 270 mPa·s/25°C, and a number-average molecular weight of 1000 relative to polypropylene glycol standards measured with a gel permeation chromatograph (GPC, columns: TSKgel G1000H + G2000H + G3000H + Guard Column).

### [Preparation Example 4]

### (Preparation of catalyst-mixed polyol (a))

Two hundred parts by weight of the polyoxyalkylene polyol (3) were homogeneously mixed with 0.8 parts by weight of lead 2-ethylhexanoate (produced by Wako Pure Chemical Industries, Ltd., reagent) to prepare a catalyst-mixed polyol (a).

### [Preparation Example 5]

### (Preparation of prepolymer A)

Crude-MDI (COSMONATE M-200, produced by Mitsui Takeda Chemicals Inc., NCO content: 31.4%) was modified with the polyoxyalkylene polyol (3) to give a prepolymer A having a NCO content of 10.5%.

### Example 1

### (Production of polyether polyol grafted with hydroxyl group-containing methacrylate)

In a 1-L flask equipped with a stirrer, nitrogen inlet, monomer feed pipe, and water-cooled condenser, 600 parts by weight of the polyoxyalkylene polyol (1) were placed and heated to 150°C with a mantle heater. To the flask was added dropwise over 4 hours a homogenous mixture of 200 parts by weight of the polyoxyalkylene polyol (1), 130.6 parts by weight and 69.4 parts by weight of methyl methacrylate and 2-hydroxyethyl methacrylate respectively as vinyl monomers, and 20 parts by weight of di-tert-butyl peroxide (PERBUTYL-D produced by NOF Corporation), followed by reaction for another 4 hours. Then unreacted monomers were removed at 150°C under a reduced pressure of 1.3 kPa or lower in 2 hours to obtain a polyether polyol composition (E1) that included polyether polyol grafted with hydroxyl group-containing methacrylate. The polyether polyol composition (E1) had a hydroxyl value of 59.2 mg KOH/g, a viscosity of 4000 mPa·s/25°C, and a turbidity of 30 degrees (kaolin). Other physical properties are shown in Table 1. The physical properties of the polyoxyalkylene polyol (1) are shown as Reference Example 1 in Table 1.

### (Preparation of one-component curable polyurethane resin composition)

Into a 500-mL flask equipped with a nitrogen inlet, monomer feed pipe, and water-cooled condenser, were placed 250 parts by weight of the polyether polyol composition (E1), 5.1 parts by weight of 1,4-butanediol, and 83.7 parts by weight of isophorone diisocyanate. With these amounts, the molar ratio of the polyether polyol composition (E1) to hydroxyl group in 1,4-butanediol was 7:3 and the NCO index was 2.0. These components were homogeneously mixed by stirring, and this mixture was heated to 80°C with a mantle heater and the reaction was conducted for 0.5 hour. To the reaction mixture was added 0.014 parts by weight of tin catalyst Stanoct Y730 (produced by API Corporation) and the reaction was performed for 6 hours at 80°C. The reaction product obtained had an isocyanate group content of 4.86 wt%. Here, the isocyanate group content was measured according to section 6.3 "Isocyanate group content" in JIS K7301 "Test method for tolylene diisocyanate-type prepolymer for thermosetting urethane elastomer".

After the reaction product was cooled to 50°C, 27.5 parts by weight of a toluene solution of 2-(2-isopropyl-1,3-oxazolidin-3-yl)ethanol were added, wherein the weight ratio of 2-(2-isopropyl-1,3-oxazolidin-3-yl)ethanol to toluene was 7:3. The reaction was conducted at 50°C for 3 hours to obtain a one-component curable polyurethane resin composition (E1).
To the polyurethane resin composition (E1), 183.1 parts by weight of fine powder of calcium carbonate (NS-1000 produced by Maruo Calcium Co., Ltd.), 0.73 parts by weight of dibutyltin laurate (STANN BL, produced by Sankyo Organic Chemicals Co., Ltd.), and 0.73 parts by weight of 2-ethylhexanoic acid were added. The mixture was cured at 23°C at a relative humidity of 55% for 10 days to prepare a specimen (cured product). The cured product was measured for mechanical strength. The weather resistance of the polyurethane resin composition (E1) was also evaluated. The results are shown in Table 2.

### Example 2

### (Production of polyether polyol grafted with hydroxyl group-containing methacrylate)

A polyether polyol composition (E2) that included polyether polyol grafted with hydroxyl group-containing methacrylate was obtained in the same manner as in Example 1 except that 69.4 parts by weight of 2-hydroxyethyl methacrylate were used as a vinyl monomer instead of methyl methacrylate and 2-hydroxyethyl methacrylate. The physical properties of the polyether polyol composition (E2) are shown in Table 1.

### (Preparation of one-component curable polyurethane resin composition)

A one-component curable polyurethane resin composition (E2) was prepared in the same manner as in Example 1 except that the polyether polyol composition (E2) was used instead of the polyether polyol composition (E1) and that the components were mixed in the ratio shown in Table 2. To the polyurethane resin composition (E2), 198.2 parts by weight of fine particles of calcium carbonate (NS-1000 produced by Maruo Calcium Co., Ltd.), 0.79 parts by weight of dibutyltin laurate (STANN BL produced by Sankyo Organic Chemicals Co., Ltd.), and 0.79 parts by weight of 2-ethylhexanoic acid were added. The mechanical strength and weather resistance were evaluated as in Example 1. The results are shown in Table 2.

### Example 3

### (Production of polyether polyol grafted with hydroxyl group-containing methacrylate)

In a 1-L flask equipped with a stirrer, nitrogen inlet, monomer feed pipe, and water-cooled condenser, 511.3 parts by weight of the polyoxyalkylene polyol (2) were placed and heated to 120°C with a mantle heater. Into this flask was added dropwise over 4 hours a homogeneous mixture of 355.8 parts by weight and 132.9 parts by weight of n-butyl methacrylate and 2-hydroxyethyl methacrylate respectively as vinyl monomers, and 47.6 parts by weight of 1,1-bis(t-butylperoxy)cyclohexane diluted to 70% purity with hydrocarbon (PERHEXA C, produced by NOF Corporation) as a radical initiator, and the reaction was performed for another 4 hours. After that, unreacted monomers were removed at 120°C under a reduced pressure of 1.3 kPa or lower in 2 hours to obtain a polyether polyol composition (E3) that included polyether polyol grafted with hydroxyl group-containing methacrylate. The polyether polyol composition (E3) had a hydroxyl value of 113.0 mg KOH/g, a viscosity of 74000 mPa·s/25°C, and a turbidity of 10 degrees (kaolin). Other physical properties are shown in Table 1.

### (Preparation of two-component curable polyurethane resin composition)

The polyether polyol composition (E3) was homogeneously mixed with the catalyst-mixed polyol (a) obtained in Preparation Example 4 in the ratio described in Table 3 to prepare a polyol mixture A.
The polyol mixture A was mixed with the prepolymer A obtained in Preparation Example 5 to prepare a two-component curable polyurethane resin composition (E3), and the adhesion of the composition was evaluated according to the method described in (2)-(vii) "Adhesion". The results are shown in Table 3.

The cured product used for evaluating the adhesion was evaluated for mechanical strength in the same manner as in Example 1. Note that this cured product contained no additives such as fine particles of calcium carbonate. The results are shown in Table 3.

### [Comparative Example 1]

### (Preparation of one-component curable polyurethane resin composition)

A one-component curable polyurethane resin composition (C1) was prepared in the same manner as in Example 1 except that the polyoxyalkylene polyol (1) was used instead of the polyether polyol composition (E1) and that the components were mixed according to the ratio shown in Table 2. To the polyurethane resin composition (C1) were added 161.7 parts by weight of fine particles of calcium carbonate (NS-1000 produced by Maruo Calcium Co., Ltd.), 0.65 parts by weight of dibutyltin laurate (STANN BL produced by Sankyo Organic Chemicals Co., Ltd.), and 0.65 parts by weight of 2-ethylhexanoic acid. The mechanical strength and weather resistance were evaluated in the same manner as in Example 1. The results are shown in Table 2.

### [Comparative Example 2]

### (Preparation of one-component curable polyurethane resin composition)

A one-component curable polyurethane resin composition (C2) was prepared in the same manner as in Example 1 except that the polyoxyalkylene polyol (1) was used instead of the polyether polyol composition (E1) and that the components were mixed in the ratio described in Table 2. To the polyurethane resin composition (C2) were added 161.7 parts by weight of fine particles of calcium carbonate (NS-1000 produced by Maruo Calcium Co., Ltd.), 62.5 parts by weight of an acrylic plasticizer (UP-1000 produced by Toagosei Co., Ltd.), 0.65 parts by weight of dibutyltin laurate (STANN BL produced by Sankyo Organic Chemicals Co., Ltd.), and 0.65 parts by weight of 2-ethylhexanoic acid. The mechanical strength and weather resistance were evaluated as in Example 1. The results are shown in Table 2.

### [Comparative Example 3] (Production of polyether polyol grafted with methacrylate containing no hydroxyl group)

A polyether polyol composition (C3) that included polyether polyol grafted with methacrylate was obtained in the same manner as in Example 1 except that 200.0 parts by weight of methyl methacrylate were used as a vinyl monomer instead of methyl methacrylate and 2-hydroxyethyl methacrylate. Physical properties of the polyether polyol composition (C3) are shown in Table 1.

### (Preparation of one-component curable polyurethane resin composition)

A one-component curable polyurethane resin composition (C3) was prepared in the same manner as in Example 1 except that the polyether polyol composition (C3) was used instead of the polyether polyol composition (E1) and that the components were mixed in the ratio shown in Table 2. To the polyurethane resin composition (C3) were added 157.1 parts by weight of fine particles of calcium carbonate (NS-1000 produced by Maruo Calcium Co., Ltd.), 0.63 parts by weight of dibutyltin laurate (STANN BL produced by Sankyo Organic Chemicals Co., Ltd.), and 0.63 parts by weight of 2-ethylhexanoic acid. The mechanical strength and weather resistance were evaluated in the same manner as in Example 1. The results are shown in Table 2.

### [Comparative Example 4]

### (Production of polyether polyol with hydroxyl group-containing methacrylate polymer dispersed therein)

Production of a polyether polyol composition (C4) was attempted in the same manner as in Example 1 except that 69.4 parts by weight of 2-hydroxyethyl methacrylate were used as a vinyl monomer instead of methyl methacrylate and 2-hydroxyethyl methacrylate, and that 10 parts by weight of 2,2'-azobisisobutyronitrile was used instead of di-tert-butyl peroxide, and that the reaction temperature was changed from 150°C to 120°C. However, the desired composition was not obtained since the mixture was coagulated leading to white cloudiness in the initial stage of reaction.

### [Comparative Examples 5 and 6]

### (Preparation of two-component curable polyurethane resin compositions)

A two-component curable polyurethane resin composition (C5) or (C6) was prepared and adhesion thereof was evaluated in the same manner as in Example 3 except that the polyoxyalkylene polyol (3) or (2) was used instead of the polyether polyol composition (E3) and that the components were mixed in the ratio described in Table 3. The results are shown in Table 3.

The cured products used for evaluating the adhesion were evaluated for mechanical strength in the same manner as in Example 1. Note that these cured products contained no additives such as fine particles of calcium carbonate. The results of evaluation are shown in Table 3.
Comparison of Example 3 with Comparative Examples 5 and 6 indicates that the cured polyurethane resin obtained by using the grafted polyether polyol of the present invention is superior in adhesion and mechanical strength to the conventional cured polyurethane resins.

**Table 1**

| | | | Example 1 | Example 2 | Example 3 | Comparative Example 3 | Comparative Example 4 | Reference Example 1 |
|---|---|---|---|---|---|---|---|---|
| | | | MMA/HEMA-grafted polyol | HEMA-grafted polyol | n-BMA/HEMA-grafted polyol | MMA-grafted polyol | HEMA-dispersed polyol | Polyoxyalkyle ne polyol (1) |
| Polyoxyalkylene polyol (1) | initial charge | Parts by weight | 600 | 600 | - | 600 | 200 | - |
| | Additional charge | Parts by weight | 200 | 200 | - | 200 | 600 | - |
| Polyoxyalkylene polyol (2) | Initial charge | Parts by weight | - | - | 511.3 | - | - | - |
| | Additional charge | Parts by weight | - | - | - | - | - | - |
| Vinyl monomer | Methyl methacrylate (MMA) | Parts by weight | 130.6 | - | | 200.0 | - | - |
| | n-Butyl methacrylate (n-BMA) | Parts by weight | - | - | 355.8 | - | - | - |
| | 2-Hydroxyethyl methacrylate (HEMA) | Parts by weight | 69.4 | 69.4 | 132.9 | - | 69.4 | - |
| Radical initiator | Di-tert-butyl peroxide | Parts by weight | 20 | 20 | - | 20 | - | - |
| | PERHEXA C | Parts by weight | - | - | 47.6 | - | - | - |
| | 2,2'-azobisisobutyronitrile | Parts by weight | - | - | - | - | 10 | - |
| Number of moles of radical initiator per mole of hydroxyl group in polyol | | mol/mol-OH in polyol | 0.25 | 0.25 | 0.25 | 0.25 | 0.11 | - |
| Reaction temperature | | °C | 150 | 150 | 120 | 150 | 120 | - |
| Dropping time | | hours | 4 | 4 | 4 | 4 | Coagulated at initial stage of reaction | - |
| Reaction time | | hours | 4 | 4 | 4 | 4 | | - |
| Polyether polyol composition | | | (E1) | (E2) | (E3) | (C3) | (C4) | - |
| Hydroxyl value mg KOH/g | | | 59.2 | 67.0 | 113.0 | 30.1 | Not measured | 37.4 |

| viscosity | | mPa·s/25°C | 4000 | 2500 | 74000 | 3600 | Not measured | 600 |
|---|---|---|---|---|---|---|---|---|
| Polymer content | | % | 19.0 | 7.6 | 47.9 | 18.5 | Not measured | 0 |
| Appearance | | | Light yellow | Light yellow | Light yellow | Light yellow | White cloudy | Colorless Transparent |
| Turbidity in light transmission | | Degrees (Kaolin) | 30 | 20 | 10 | 3 | ≥100 | 1 |
| Light transmittance | Wavelength nm 300 | % | 3 | 7 | 2 | 3 | 4 | 50 |
| | Wavelength 500 nm | % | 94 | 99 | 98 | 99 | 12 | 99 |
| PERHEXA C: 1,1-bis(t-butylperoxy)cyclohexane diluted to 70% purity with hydrocarbon (Radical initiator produced by NOF Corporation) | | | | | | | | |

**Table 2**

| | | | Example 1 | Example 2 | Comparative Example 1 | Comparative Example 2 | Comparative Example 3 | Comparative Example 4 |
|---|---|---|---|---|---|---|---|---|
| Polyether polyol composition | Type | | (E1) | (E2) | Polyoxy-alkylene polyol (1) | Polyoxy-alkylene polyol (1) | (C3) | (C4) |
| | Polyol | | MMA/HEMA-grafted polyol | HEMA-grafted polyol | | | MMA-grafted polyol | HEMA-dispersed polyol |
| | Appearance | | Light yellow | Light yellow | Colorless | Colorless | Light yellow | White cloudy |
| | Turbidity in light transmission | Degrees (Kaolin) | 30 | 20 | 1 | 1 | 3 | ≥100 |
| | Amount mixed | Parts by weight | 250.0 | 250.0 | 250.0 | 250.0 | 250.0 | Failed to synthesize one-component curable polyurethane resin composition due to coagulation of polyether polyol composition. |
| 1,4-butanediol | | Parts by weight | 5.1 | 7.4 | 3.2 | 3.2 | 2.6 | |
| Isophorone diisocyanate | | Parts by weight | 83.7 | 105.3 | 52.9 | 52.9 | 43.3 | |
| Tin-based 730) catalyst (STANOCT Y | | Parts by weight | 0.014 | 0.015 | 0.012 | 0.012 | 0.012 | |
| 2-(2-isopropyl-1,3-oxazolidin-3-yl)ethanol/toluene solution (7:3) | | Parts by weight | 27.5 | 33.7 | 17.3 | 17.3 | 18.3 | |
| Subtotal | | | 366.2 | 396.4 | 323.4 | 323.4 | 314.2 | |
| Calcium carbonate (NS-1000) | | Parts by weight | 183.1 | 198.2 | 161.7 | 161.7 | 157.1 | |
| Acrylic plasticizer (UP-1000) | | Parts by weight | - | - | - | 62.5 | - | |
| Dibutyltin laurate (STANN BL) | | Parts by weight | 0.73 | 0.79 | 0.65 | 0.65 | 0.63 | |
| 2-ethylhexanoic acid | | Parts by weight | 0.73 | 0.79 | 0.65 | 0.65 | 0.63 | |
| Total | | Parts by weight | 550.8 | 596.2 | 486.4 | 548.9 | 472.6 | |
| Mechanical strength | Hardness | | 87 | 95 | 97 | 35 | 22 | |
| | Modulus 100 | MPa | 5.99 | 7.02 | 1.12 | 0.78 | 0.5 | |
| | Tensile strength | MPa | 6.15 | 7.50 | 1.94 | 2.15 | 1.35 | |
| | Elongation | % | 111 | 105 | 276 | 453.00 | 500 | |
| | Tear strength | N/mm | 26 | 30 | 16.4 | 15.40 | 7.6 | |
| Weather resistance (Fedo) | 18 hours | | A | A | C | C | A | |
| | 100 hours | | A | A | C | C | B | |
| | 250 hours | | A | A | C | C | C | |

**Table 3**

| | | | Example 3 | Comparative Example 5 | Comparative Example 6 |
|---|---|---|---|---|---|
| Polyether polyol composition | Type | | (E3) | Polyoxyalkylene polyol (3) | Polyoxyalkylene polyol (2) |
| | Polyol | | n-BMA/HEMA-grafted polyol | | |
| | Appearance | | Light yellow | Colorless | Colorless |
| | Turbidity in light transmission | Degrees (Kaolin) | 10 | 1 | 1 |
| | Amount mixed | Parts by weight | 12.5 | 12.5 | 12.5 |
| Catalyst-mixed polyol (a) | | Parts by weight | 12.5 | 12.5 | 12.5 |
| Prepolymer A (NCO index=1.1) | | Parts by weight | 26,9 | 31.6 | 26.8 |
| Adhesion (peel test) | First measurement | kgf/cm | 1.45 | 1.20 | 0.45 |
| | Second measurement | kgf/cm | 1.50 | 1.10 | 0.60 |
| | Third measurement | kgf/cm | 1.45 | 1.05 | 0.50 |
| | Average | kgf/cm | 1.47 | 1.12 | 0.52 |
| Mechanical strength | Hardness | | 92 | 87 | 67 |

### Industrial Applicability

The grafted polyether polyol related to the present invention can be suitably used as a raw material for one-component or two-component curable polyurethane resin compositions, and cured products of such compositions are excellent in mechanical strength and weather resistance. The polyurethane resin compositions are useful as adhesives and waterproofing agents.

## Claims

1. A polyether polyol grafted with hydroxyl group-containing (meth)acrylate, which comprises an ester group represented by formula (1) below in the molecule: 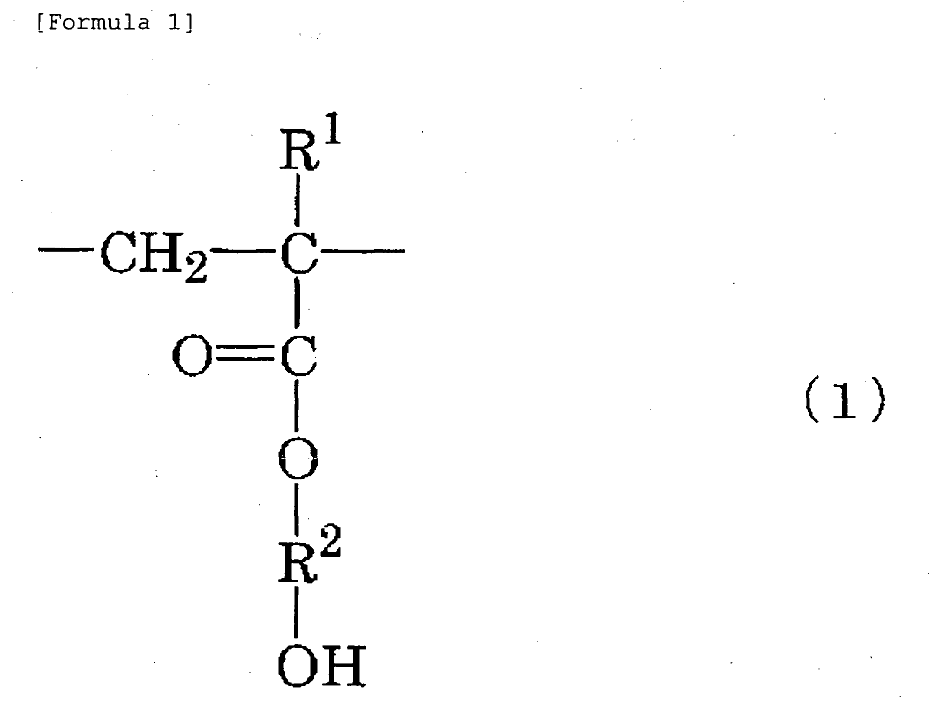 (wherein R¹ represents a hydrogen atom or a methyl group, and R² represents an alkylene group having 1 to 18 carbon atoms).

2. A polyether polyol grafted with hydroxyl group-containing (meth)acrylate, which is obtained by reacting a polyoxyalkylene polyol with a vinyl monomer including at least a hydroxyl group-containing (meth)acrylate represented by formula (2) below: 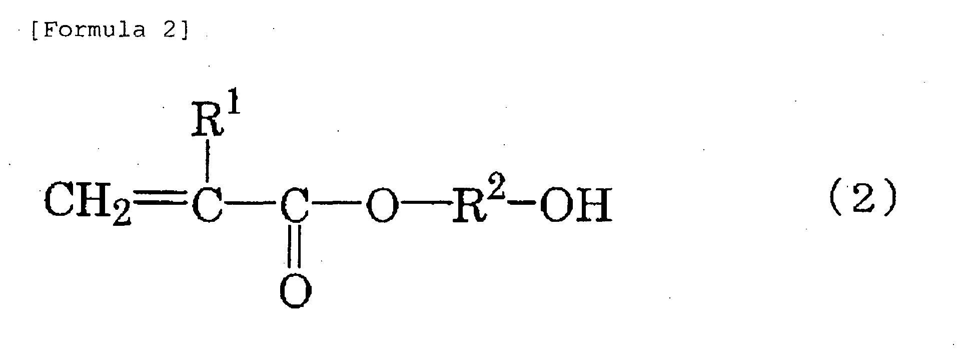 (wherein R¹ represents a hydrogen atom or a methyl group, and R² represents an alkylene group having 1 to 18 carbon atoms).

3. A polyether polyol grafted with hydroxyl group-containing (meth)acrylate, which is obtained by reaction of 40 to 95 parts by weight of a polyoxyalkylene polyol with 5 to 60 parts by weight of a vinyl monomer including at least a hydroxyl group-containing (meth)acrylate represented by formula (2) below (with the proviso that the sum of the polyoxyalkylene polyol and the vinyl monomer is 100 parts by weight) in the presence of an alkyl peroxide as a radical initiator, wherein 0.1 to 5 moles of the alkyl peroxide and 0.5 to 10 moles of the hydroxyl group-containing (meth)acrylate are used relative to 1 mole of hydroxyl group in the polyoxyalkylene polyol: 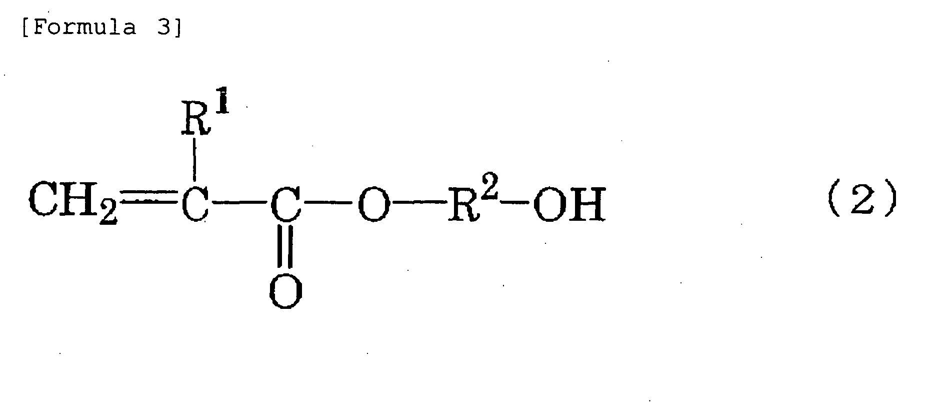 (wherein R¹ represents a hydrogen atom or a methyl group, and R² is an alkylene group having 1 to 18 carbon atoms).

4. The polyether polyol grafted with hydroxyl group-containing (meth)acrylate according to any of Claims 1 to 3, wherein the polyether polyol has a turbidity in light transmission of 50 degrees (kaolin) or less.

5. The polyether polyol grafted with hydroxyl group-containing (meth)acrylate according to any of Claims 1 to 4, wherein the polyoxyalkylene polyol has a number-average molecular weight of 500 to 10000.

6. The polyether polyol grafted with hydroxyl group-containing (meth)acrylate according to Claim 1 whose light transmittance is 30% or less at wavelength of 300 nm and 90% or more at wavelength of 500 nm when measured with a spectrophotometer.

7. The polyether polyol grafted with hydroxyl group-containing (meth)acrylate according to any of Claims 1 to 6, wherein the polyoxyalkylene polyol has 1 to 8 hydroxyl groups in the molecule.

8. A two-component curable polyurethane resin composition comprising the polyether polyol grafted with hydroxyl group-containing (meth)acrylate according to any of Claims 1 to 7.

9. A one-component curable polyurethane resin composition comprising the polyether polyol grafted with hydroxyl group-containing (meth)acrylate according to any of Claims 1 to 7.

10. An adhesive comprising the polyether polyol grafted with hydroxyl group-containing (meth)acrylate according to any of Claims 1 to 7.

11. A method for producing a polyether polyol grafted with hydroxyl group-containing (meth)acrylate, the method comprising reacting 40 to 95 parts by weight of a polyoxyalkylene polyol with 5 to 60 parts by weight of a vinyl monomer including at least a hydroxyl group-containing (meth)acrylate represented by formula (2) below (with the proviso that the sum of the polyoxyalkylene polyol and the vinyl monomer is 100 parts by weight) in the presence of an alkyl peroxide as a radical initiator: 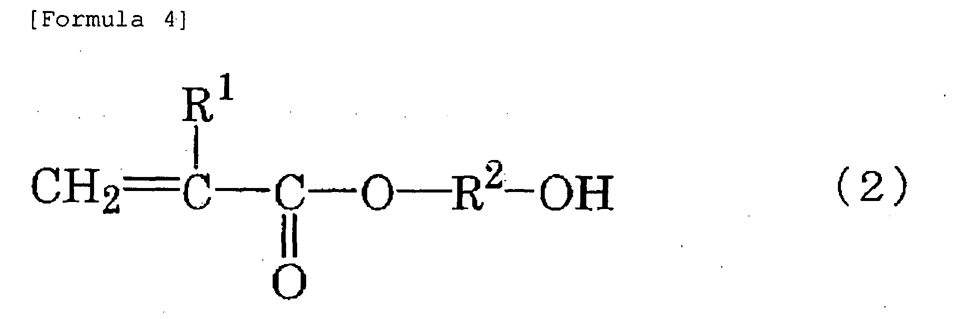 (wherein R¹ represents a hydrogen atom or a methyl group, and R² is an alkylene group having 1 to 18 carbon atoms).

12. The method for producing a polyether polyol grafted with hydroxyl group-containing (meth)acrylate according to Claim 11, wherein 0.1 to 5 moles of the alkyl peroxide and 0.5 to 10 moles of the hydroxyl group-containing (meth)acrylate are used relative to 1 mole of hydroxyl group in the polyoxyalkylene polyol.

13. The method for producing a polyether polyol grafted with hydroxyl group-containing (meth)acrylate according to Claim 11 or 12, wherein the polyoxyalkylene polyol has a number-average molecular weight of 500 to 10000.

14. The method for producing a polyether polyol grafted with hydroxyl group-containing (meth)acrylate according to any of Claims 11 to 13, wherein the polyoxyalkylene polyol has 1 to 8 hydroxyl groups in the molecule.
